# EUROPEAN PATENT SPECIFICATION

(11) **EP 0 684 294 B1**
(45) Date of publication and mention of the grant of the patent: **04.08.1999**
(21) Application number: 95107855.9
(22) Date of filing: 23.05.1995
(51) Int. Cl.: C09D 133/06, C09D 163/00, C09D 167/00

(54) **Preparation of coating compositions containing aqueous dispersed epoxy crosslinked microgel polymers**
Vorbereitung von Überzugszusammensetzungen enthaltend wässrig dispergierte epoxy-vernetzte Mikrogelpolymere
Préparation de compositions de revêtement contenant des polymères époxy gélifiés et réticulés dispersés dans l'eau

(30) Priority: 25.05.1994 US 249251; 14.07.1994 US 274804; 19.01.1995 US 374885; 21.03.1995 US 407664; 20.04.1995 US 421269
(43) Date of publication of application: 29.11.1995
(73) Proprietor: THE GLIDDEN COMPANY, Cleveland Ohio 44115 (US)
(72) Inventor: Craun, Gary Pierce, Berea, Ohio 44017 (US); Kaminski, Victor, Cary, North Carolina 27513 (US); Telford, David James, Medina, Ohio 44256 (US); DeGraff, Henry John, Stow, Ohio 44223 (US)
(74) Representative: Ward, Steven Paul

(56) References cited:
- EP-A- 0 114 478
- US-A- 4 897 434

## Description

This invention pertains to aqueous dispersed acrylic copolymers crosslinked by diepoxide resin to form an aqueous dispersed microgel film-forming polymer used as a polymeric binder for protective surface coatings applied to a substrate and particularly useful for interior surfaces of can containers for beverages and foods.

### BACKGROUND OF THE INVENTION

Industrial coatings are surface protective coatings (paint coatings) applied to substrates and typically heat cured to form continuous films for decorative purposes as well as to protect the substrate. A protective coating ordinarily comprises an organic polymeric binder, pigments, and various paint additives, where the polymeric binder acts as a fluid vehicle for the pigments and imparts rheological properties to the fluid paint coating. Upon curing, the polymeric binder hardens and functions as a binder for the pigments and provides adhesion of the dried paint film to the substrate. The pigments may be organic or inorganic and functionally contribute to opacity and colour in addition to durability and hardness, although some paint coatings contain little or no opacifying pigments and are described as clear coatings. The manufacture of paint coatings involved the preparation of a polymeric binder, mixing of component materials, grinding of pigments in the polymeric binder, and thinning to commercial standards.

Epoxy resins are particularly desirable for use in protective surface coating materials as a vehicle or polymeric binder for pigments, fillers, and other additives where the epoxy resins advantageously provide toughness, flexibility, adhesion, and chemical resistance. Water-dispersed coating compositions containing epoxy resins are highly desirable for can coating compositions and particularly useful for interior surfaces. Coatings for soft drink and beer cans, for instance, are critical due to taste sensitivity wherein such can coatings must not alter the product taste of canned beverages. Taste problems can occur in a variety of ways such as by leaching of coating components into the beverage, or by adsorption of flavour by the coating, or sometimes by chemical reaction, or by some combination thereof.

Container coating technology frequently utilizes an epoxy resin which has been grafted with acrylic monomers, styrene, and methacrylic acid. This grafted epoxy resin is prepared in solvent, usually butyl cellosolve, and n-butanol, to maintain low processing viscosities and then reduced with water by a direct or inverse let down procedure. Although cured film properties are highly desirable, such coatings suffer from the fact that sizeable amounts of organic solvent are required to obtain good performance. High molecular weight epoxy resins typically require 50% to 90% solvent (based on total solids plus organic solvent) before reducing with amine and water.

Epoxy based can coatings comprising a carbon grafted acrylic chain produced in the presence of an extender resin are disclosed in U.S. Patent 4,399,241 and U.S. Patent No. 4,482,671 while U.S. Patent No. 4,595,716, and U.S. Patent No. 5,157078 teach a carbon grafting process involving solvent polymerization at moderate temperatures with high levels of peroxide initiator to produce a carbon-graft polymer. The high solvent levels, however, invariably carry over to the aqueous dispersion when the resulting polymers are dispersed into water to produce a VOC (volatile organic compounds) level considerably above 2 and typically between 360 to 480g of volatile organic compounds per litre of resin solids, (ie between 3 and 4 pounds/US gallon).

Commonly assigned U.S. Patent No. 5,290,828 discloses an acrylic grafted epoxy polyester terpolymer produced by in-situ copolymerization of ethylenic monomers with low molecular weight epoxy and unsaturated polyester resins where carboxyl monomers esterify epoxy groups while monomer double bonds coreact with polyester double bonds to form the terpolymer coating. Coating compositions based on microgels are shown in U.S. 4,897,434 where epoxy esters are preformed, then dispersed into water, and thereafter further crosslinked with available epoxy and carboxyl groups on the preformed epoxy-ester.

It now has been found that it is possible to produce a very low VOC protective coating composition having a VOC (volatile organic compounds) content of less than about 120g/litre (i.e. one pound per US gallon) of resin solids (and often free of volatile organic compounds) by using a carboxyl functional, low molecular weight acrylic addition copolymer of copolymerized ethylenic monomers, including carboxyl functional ethylenic monomer, as an aqueous dispersing or suspending agent for dispersing an epoxy resin into water. The carboxyl functional, low molecular weight addition copolymer, (preferably an acrylic copolymer and preferably having a molecular weight below 20,000 Mn) can be dispersed in ammonia water to form small particle size dispersions (ca 50 nm), while a subsequent crosslinking co-reaction with liquid diepoxide resin converts these dispersions to microgels. Accordingly this invention provides a process for producing a protective coating composition comprising carboxyl moieties and epoxy crosslinking resin dispersed in an aqueous medium characterised in that
a) an addition copolymer dispersant consisting of non-aqueous copolymerized ethylenically unsaturated monomers including at least 5% by weight of carboxyl monomers based on the weight of monomers copolymerized and having a number average molecular weight between 1,000 and 50,000 and an Acid No. above 30 is dispersed into water,
b) diepoxide crosslinking resin is dispersed into the water with the addition copolymer dispersant, the diepoxide crosslinker having an epoxide equivalent weight between 100 and 500 and a number average molecular weight between 200 and 1,000,
c) crosslinking the carboxyl functional addition copolymer dispersant with the diepoxide crosslinker whereby there is produced aqueous dispersed crosslinked microgel polymer particles having a particle size below 1µm and an Acid No. above 30 and containing from 60 to 90wt% of said addition copolymer dispersant crosslinked with 10% to 40% of the diepoxide resin, which microgel polymer particles are stably dispersed into water which contains minimal or zero amounts of organic compounds and is substantially free of surfactant.

The water dispersed, crosslinked small particle size additionally provides good storage stability, rheology control, along with exceptional film properties including excellent water resistance, low temperature cure, excellent flexibility, and good resistance to odour absorption.

In this invention, the acrylic copolymer dispersant can be synthesized at a very low solvent level or without solvent, dispersed into ammonia water, and subsequently crosslinked with liquid diepoxide resin to form stable microgel particles. Crosslinking of the addition copolymer with diepoxide while stably dispersed in water produces very small size crosslinked microgel particles, a physical property particularly useful for producing tough but resilient coating films applied to a substrate. Further advantages rely on an acid functional acrylic dispersant to produce small particle size aqueous dispersions as well as controlling viscosity by adjusting acrylic molecular weight, carboxylic acid group content, comonomer type, and degree of reaction with diepoxide crosslinking resin.

In a preferred aspect of this invention, a low molecular weight, carboxyl functional addition copolymer polymeric dispersant substantially increases the aqueous stability of water dispersed polyester polymers and further enables emulsion crosslinking to produce low or zero VOC microgel particles having very high molecular weight but a particle size usually below about 0.2 µm, (200 nm) and most preferably below 1 µm. Although carboxyl functional polyesters can be dispersed into water, low molecular weight polyesters having molecular weights below about 3,000 have limited colloidal stability as well as poor film properties, while higher molecular weight polyesters exhibit better film properties but have very poor aqueous stability. With this invention, however, low or zero VOC carboxyl functional polyester polymers having high molecular weight can be stably dispersed in water by using the carboxyl functional addition copolymer dispersant and by crosslinking the polyester with difunctional epoxy to produce crosslinked microgel particles. This means that the protective coating composition can if preferred often be free of specially added surfactant. The final crosslinked particle size is controlled by composition, molecular weight, concentration, temperature, ionic strength and the relative amounts of polymeric dispersant, polyester, and microgel crosslinking.

### SUMMARY OF THE INVENTION

Briefly, the invention pertains to an aqueous dispersed protective coating composition containing a polymeric binder containing zero or very low levels of organic solvent, where the polymeric binder comprises aqueous dispersed microgel particles produced by dispersing in water a carboxyl functional addition copolymer dispersing agent to form an aqueous mixture capable of dispersing diepoxide crosslinking resin in water. After dispersing the diepoxide resin into water, the carboxyl functional addition copolymer is crosslinked with a diepoxide resin to form an epoxy crosslinked copolymer in the form of microgel particles having a particle size preferably less than about 1 micron. On a weight basis, the epoxy crosslinked addition copolymer microgel comprises 1% to 40% low molecular weight diepoxide resin with the balance being between about 60% and 99% by weight carboxyl functional dispersing agent for dispersing the diepoxide resin into water. The carboxyl addition copolymer can further disperse polyester and/or high molecular weight epoxy resins followed by crosslinking with the low molecular weight diepoxide resin to form aqueous dispersed microgel polymers.

### DETAILED DESCRIPTION OF THE INVENTION

The aqueous dispersed, microgel of addition copolymer crosslinked with diepoxide resin is produced by dispersing by weight 1% to 40% diepoxide resin in water with 60% to 99% carboxyl functional addition copolymer dispersing agent along with other polymers if any and followed by crosslinking of the aqueous dispersed addition copolymer with the diepoxide resin.

Referring first to the addition copolymer dispersant for dispersing diepoxide resin into water, the dispersant is a low molecular weight addition copolymer of copolymerized ethylenic unsaturated monomers including at least 5% by weight carboxyl monomer such as acrylic acid, methacrylic acid, ethacrylic acid and similar acrylic acids, or similar acrylic type acids. Less preferred fumaric or maleic dicarboxylic acids can be used if desired to provide carboxyl functionality. Preferred compositions contain between 10% and 50% by weight carboxyl monomer based on the total ethylenic monomers copolymerized. Useful polymerizable ethylenically unsaturated monomers contain carbon-to-carbon unsaturation and include vinyl monomers, acrylic monomers, allylic monomers, acrylamide monomers, as well as the mono carboxylic unsaturated acids. Vinyl esters include vinyl acetate, vinyl propionate, vinyl butyrates, vinyl benzoates, vinyl isopropyl acetates and similar vinyl esters; vinyl halides include vinyl chloride, vinyl fluoride, and vinylidene chloride; vinyl aromatic hydrocarbons include styrene, methyl styrenes and similar lower alkyl styrenes, chlorostyrene, vinyl toluene, vinyl naphthalene; vinyl aliphatic hydrocarbon monomers include alpha olefins such as ethylene, propylene, isobutylene, and cyclohexane; vinyl alkyl ethers including methyl vinyl ether, isopropyl vinyl ether, n-butyl vinyl ether, and isobutyl vinyl ether. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and various reaction products such as butyl, phenyl, and cresyl glycidyl ethers reacted with acrylic and methacrylic acids, hydroxyl alkyl acrylates and methacrylates such as hydroxyethyl and hydroxypropyl acrylates and methacrylates, as well as amino acrylates and methacrylates. Useful ethylenic monomers further include N-alkylol amides including acrylamides or methacrylamides such as N-methylol acrylamide, N-ethanol acrylamide, N-propanol acrylamide, N-methylol methacrylamide, N-ethanol methacrylamide, and similar alkyl acrylamide or methacrylamide monomers containing methyl, ethyl, propyl, n-butyl or iso-butyl alkyl groups. Minor amounts of functional monomers can be added, if desired, such as hydroxyl, amino, and amino functional groups containing monomers. Hydroxyl containing monomers are hydroxy containing ethylenically unsaturated monomers including hydroxy alkyl acrylates such as 2-hydroxy ethyl acrylate and methacrylate, 2-hydroxpropyl acrylate and methacrylate, and similar hydroxy alkyl acrylates. Amino containing monomers include acrylamide and methacrylamide or similar alkyl alkylol acrylamide monomers.

Carboxyl functional monomers are particularly included as previously indicated and comprise acrylic acids including acrylic and methacrylic acid, ethacrylic acid, alpha-chloroacrylic acid, alpha-cyanoacrylic acid, crotonic acid, beta-acryloxy propionic acid, and beta-styryl acrylic acid and similar acrylic acid and lower alkyl substituted acrylic acids wherein the preferred carboxylic monomers are acrylic and methacrylic acids.

The acrylic dispersant can be prepared at about 0 to 0.2 weight ratio of organic solvent to polymer solids at 100°C to 170°C in the absence of water. Glycol ether solvents such as butyl cellosolve and hexyl cellosolve are preferred. Suitable initiators include the common peroxides, hydroperoxides, and peresters, such as benzoyl peroxide, dicumyl peroxide, t-butyl perbenzoate, and t-butyl hydroperoxide. Initiators are used at levels of about 1% to 10% based on the weight of monomers copolymerized.

On a weight basis of copolymerized ethylenic monomers, the carboxyl functional addition copolymer dispersing agent comprises between 5% and 50% copolymerized carboxyl monomer, between 5% and 95% acrylic monomers, with the balance being other ethylenically unsaturated monomers. Other carboxyl functional addition copolymers, such as poly (ethylene-acrylic acid) copolymer, are useful. The addition copolymer has a number average molecular weight between 1,000 and 50,000 preferably between 2,000 and 20,000, as measured by gel permeation chromatography and an Acid No. about 30 and preferably between 70 and 300 mgm. KOH per gram of addition copolymer.

Referring next to the embodiment where low molecular weight, carboxyl polyester oligomers are dispersed into water with the low molecular weight addition copolymer dispersants in accordance with this invention, useful polyester oligomers comprise the esterification products of glycols, diols, or polyols with excess equivalents of dicarboxylic acid anhydrides or polycarboxylic acids. Linear aliphatic glycols are esterified with greater molar amounts of aromatic dicarboxylic acid and/or linear dicarboxylic acid having between 2 and 36 linear carbon atoms such as adipic, azelaic, succinic, glutaric, pimelic, suberic or sebacic acid, to produce low molecular weight polyesters. Although not preferred, minor amounts of monocarboxylic unsaturated acid such as acrylic, methacrylic or ethacrylic acid can be esterified. Preferred and commercially available linear saturated dicarboxylic acids are dodecanedioic acid, dimer fatty acids, or azelaic acid, while useful unsaturated acids are maleic and fumaric. Aromatic dicarboxylic acids (anhydrides) include phthalic, isophthalic, terephthalic, and tetrahydrophthalic. Minor amounts of polyfunctional acids such as trimelletic acid can be added. Suitable glycols include linear aliphatic glycols having 2 to 16 carbon atoms such as 1,3- or 1,4-butylene glycol, 1,6-hexane diol, neopentyl glycol, propylene glycol, ethylene glycol and diethylene glycol, propylene and dipropylene glycol, and similar linear glycols. Preferred glycols are hydrophobic glycols such as hydrogenated Bisphenol A neopentyl glycol and 1,6-hexane diol. Minor amounts of polyols can be used such as glycerol, pentaerythritol, or trimethylol ethane or propane, if desired. The excess equivalents of aromatic and linear saturated dicarboxylic acid over glycol equivalents is between about 1% and 30% and preferably between about 4% and 20%. The polyester contains excess unreacted carboxylic groups to provide a carboxylic acid functional polyester having an Acid No. between 20 and 200 and preferably between 30 and 100 milligrams of KOH per gram of polyester. The number average molecular weight of useful polyester oligomer polymers are between 600 and 5,000 and preferably between 1,000 and 3,000.

In a preferred aspect of this invention, low molecular weight carboxyl functional polyester oligomer having a number average molecular weight between about 1,000 and 3,000 is utilized as a processing polymerization medium for copolymerizing the ethylenic monomers to form the addition copolymer dispersant. In this regard, the polyester oligomer can replace all or most of the organic solvent as the polymerization medium for ethylenic monomer copolymerization thereby eliminating volatile organic compounds from the resulting polymeric binder as well as the coating composition. In accordance with this aspect of the invention, the carboxyl functional addition copolymer is prepared in the polyester oligomer medium to produce a mixture of carboxyl functional addition copolymer dispersant and carboxyl functional polyester oligomer. The mixture of carboxyl functional copolymer dispersant and carboxyl functional polyester oligomer can be dispersed into water by neutralizing at least part of the collective carboxyl functionality with an organic or inorganic base where the preferred bases are tertiary amines and the most preferred is ammonia. The mixture of carboxyl functional polymers are dispersed into water to provide an aqueous dispersion of addition polymer dispersant.

Acid functional polyester oligomers can be prepared by esterification of dicarboxylic acid groups with dihydroxyl compounds in the absence of water. The polyester component can be synthesized by bulk polymerization, where the raw materials are charged in bulk and esterified at temperatures typically between 170°C to 240°C, although moderately higher or lower temperatures can be utilized satisfactorily. An esterification catalyst can be used, typically an organic tin compound at less than 1% levels based on weight of the charge.

This aspect of the invention is based on the preparation of a dispersion in water containing addition copolymer dispersant to assist dispersion of the carboxyl polyester oligomer into water. The carboxyl functional polyester and carboxyl functional polymeric dispersant are stirred and heated to form a mixture and until a solution or fine slurry is formed. A solution of a base in water is added to the mixture to neutralize the carboxylic acid groups and prepare a solution-like mixture, which preferably can be diluted to less than about 50% NV with additional water. On a weight basis, the aqueous dispersed microgel polymer comprises between 2% and 95% preferably 2% to 23% of addition copolymer dispersant, between 1% and 97%, preferably 75% to 96% carboxyl polyester, and between 1% and 40%, preferably 2% to 20% diepoxide crosslinking resin.

In still a further embodiment of this invention, the carboxyl functional addition copolymer dispersant can be utilized to disperse high molecular weight epoxy resin into water to form an aqueous dispersed resin mixture followed by the addition of low molecular weight diepoxide crosslinking resin to crosslink the addition copolymer and form an aqueous dispersed microgel polymer in accordance with this invention. The low molecular weight diepoxide resins can be dispersed into aqueous dispersions of carboxyl functional addition copolymer dispersant, or alternatively, can be mixed with the addition copolymer dispersant before dispersion into water. A particularly preferred procedure is to copolymerize the ethylenic monomers in the presence of the high molecular weight epoxy resin to form the addition copolymer dispersant in-situ with the epoxy resin and then disperse the in-situ resin mixture into water. In this regard, the in-situ polymerization of monomers generally comprises reacting the ethylenically unsaturated monomers in the presence of the high molecular weight epoxy with about 1% to 10% peroxide by weight based on the monomer copolymerized. The in-situ formed carboxyl functional copolymer can have a molecular weight preferably between 2,000 and 20,000 while carboxyl monomers should comprise at least 5% by weight of the monomer mixture and preferably should be above 15%. The Acid Number of the in-situ formed resin mixture should be above 30 and preferably between 70 and 300 mg KOH per gram of resin solids. The copolymerized acrylic or methacrylic acid content preferably is between 5% and 99% by weight of the addition copolymer. The copolymer dispersant comprises between 5% and 99% by weight of the in-situ formed resin mixture.

The expoxy resin can be either aliphatic or aromatic, although the aromatic epoxy resins are preferred. The most preferred epoxy resins are polyglycidyl ethers of bisphenol-A, especially those having 1, 2-epoxy equivalency of from about 1.3 to about 2. The molecular weight should be from about 350 to about 20,000 and preferably, for sanitary coating compositions, from about 2,000 to about 10,000. Mixtures of monoepoxides and diepoxides are desirable. Epoxy resins are predominantly linear chain molecules comprising the coreaction product of polynuclear dihydroxy phenols or bisphenols with halohydrins to produce epoxy resins containing at least one and preferably two epoxy groups per molecule. The most common bisphenols are bisphenol-A, bisphenol-F, bisphenol-S, and 4, 4-dihydroxy bisphenol, with the most preferred being bisphenol-A. Halohydrins include epichlorohydrin, dichlorohydrin, and 1,2-dichloro 3-hydroxypropane with the most preferred being epichlorohhydrin. Preferred epoxy resins comprise the coreaction product of excess molar equivalents of epichlorohydrin and bisphenol-A to produce predominantly an epoxy group terminated linear molecular chain of repeating units of diglycidyl ether of bisphenol-A containing between 2 and 25 repeating copolymerized units of diglycidyl ether of bisphenol-A. In practice, excess molar equivalents of epichlorohydrin are reacted with bisphenol-A to produce epoxy resins where up to two moles of epichlorohydrin coreact with one mole of bisphenol-A, although less than complete reaction can produce difunctional epoxy resin along with monoepoxide chains terminated at the other end with a bisphenol-A unit. The most preferred linear epoxy resins are poly-glycidyl ethers of bisphenol-A having terminating 1,2-epoxide groups and an epoxy equivalent weight between 2,000 and 10,000, and a number average molecular weight from about 4,000 to 20,000 as measured by gel permeation chromatography (GPC). Commercially available epoxy resins include Dow chemical epoxy resins identified by trade number and equivalent molecular weights as follows: DER 661 (525); DER 664 (900); while Shell chemical epoxy resins are EPON 1001 (525); EPON 1007 (2000); EPON 1009F (3000); and Ciba-Geigy linear epoxy resins GT-7012 (1400); GT-7014 (1500); GT7074 (2000); and GT-259 (1200). Although not as common, trifunctional epoxy resins are useful comprising branched chain epoxy resins where the branched chains as well as the backbone chain are each terminated with a terminal epoxide group to provide greater than two epoxide functionality. Trifunctional epoxy resins can be produced by coreacting epichlorohydrin with polynuclear polyhydroxy phenols, trifunctional phenols, or aliphatic trifunctional alcohols.

The epoxy resin can be heated in the absence of water in a reactor wherein the polymerizable monomer can be added slowly over a period of at least one or two hours along with a free radical initiator. Although the reaction may be conducted in the absence of solvent, a solvent can be added such as xylene, benzene, ethyl benzene, toluene, and the alkoxy alkanols. Alcohols such as methanol, ethanol, propanol, butanol, and the like, are suitable, with butanol being preferred. Ethylene glycol monobutyl ether, ethylene glycol monohexyl ether, ethylene glycol monobutyl ether acetate, and the like, hexane, mineral spirits, and the like, are also suitable. For subsequent dispersion into water, the solvents selected should be water-soluble materials, such as acetone, butanol, ethanol, propanol, ethylene glycol monoethyl ether, and the like. In practice, the epoxy resin and the mixture of polymerizable monomers are reacted together in the presence of a free radical initiator, preferably of the peroxide type, and benzoyl peroxide t-butyl perbenzoate are most preferred. Typical and useful free radical initiators include cumene hydroperoxide, benzoyl peroxide t-butyl perbenzoate, t-butyl peroxide, lauryl peroxide, methyl ethyl ketone peroxide, dicumyl peroxide, chlorobenzoyl peroxide, and the like. Benzoyl peroxide and t-butyl perbenzoate are preferred as the free radical initiator for use in the practice of the present invention. The amount of free radical catalyst is expressed in terms of percentage by weight of peroxide based on the total weight of the polymerizable monomer, or equivalent, at the temperature of use. The amount of peroxide catalyst should be at least about 1% and preferably between 2% and 10% by weight peroxide initiator based on the weight of ethylenic monomers copolymerized. The monomers and initiators are heated at a reaction temperature preferably maintained in the range from about 80°C to about 180°C. Operating temperatures in the range from about 30°C to about 200°C are feasible, depending upon the end results and operating conditions selected, although the preferred temperature range is between 100°C and 150°C. After the monomers are added, the reaction mixture is normally held at reaction temperature to complete the monomer conversions.

The addition copolymer and epoxy resin mixture is then subsequently dispersed into water using a fugitive base such as primary, secondary, and tertiary alkyl, alkanol, aromatic amines, or alkanolalkyl mixed amines such as monoethanol amine, dimethyl ethanol amine, diethanol amine, triethyl amine, dimethyl aniline, ammonium hydroxide, and the like. In accordance with this aspect of the invention, the microgel crosslinked polymeric composition comprises by weight between about 20% and 95% addition copolymer dispersant, between about 1% and 79% epoxy resin, and between 1% and 40% diepoxide crosslinking resin.

In a particularly preferred method of dispersing epoxy resin into water, it has been found that highly desirable epoxy coating compositions can be prepared without organic solvents by mixing a low molecular weight polyester diluent with the epoxy resin prior to in-situ polymerization of the ethylenic monomers in the presence of the epoxy resin. In particular, it has been found that low molecular weight, low viscosity, linear polyesters can be advantageously used as a diluent for high molecular weight epoxy resins to provide a fluid polymerization medium for in-situ copolymerization of the ethlenic monomers to form the addition copolymer dispersant in the epoxy resin mixture. The resulting in-situ formed resin mixture can then be dispersed into water assisted by a volatile base followed by dispersion of diepoxide crosslinking resin to crosslink with the addition copolymer dispersant and form a microgel in accordance with this invention. Plasticizing effects imparted by the low molecular weight polyester diluent in the coating film can reduce or eliminate the need for low Tg ethylenic monomers in the addition copolymer dispersant. Useful polyester diluents generally comprise esterification products of dicarboxylic acids with diols to produce essentially linear polyester polymers although minor amounts of branching due to tri-functional components are acceptable. Suitable linear saturated dicarboxylic acids have between 1 and 10 linear carbon atoms such as adipic, azelaic, succinic, glutaric, pimelic, suberic or sebacic acid to produce low molecular weight polyesters. Aromatic dicarboxylic acids (anhydrides) include phthalic, isophthalic, terephthalic, and tetrahydrophthalic. Suitable glycols include linear aliphatic glycols having 2 to 8 carbon atoms such as ethylene glycol, 1,3 or 1,4 butylamine glycol, 1,6 hexane diol, neopentyl glycol, propylene glycol, diethylene or dipropylene glycols, triethylene glycol and similar linear glycols. Very minor amounts of triols such as trimethylol propane, and trimethylol ethane, and other polyols such as pentaerythritol can be included if desired. Particularly useful polyesters can be prepared from any of the common dicarboxylic acids, such as adipic acid, isophthalic acid, phthalic acid, dodecanedioic acid, sebacic acid and the like, with lesser amounts of monobasic acids if desired, such as benzoic acid, and 2-ethylhexanoic acid. Unsaturated diacids preferably are not used. Useful polyesters can be prepared at about 300 to 10,000 Mn, number average molecular weights, where 500 to 3,000 Mn is preferred. Suitable polyester diluents have low melt viscosities of less than about 50 poise and preferably less than 20 poise at 150°C as measured by ICI cone-and-plate. Useful polyester diluents have a very low Acid No. below 40 and preferably between 0 to 15 milligrams KOH per gram of polymer. Monoacids such as benzoic acids, 2-ethylhexanoic acid, lauric acid, and similar lower fatty acids may be added as required to control the molecular weight and reduce free glycol levels. Polyester diluents are prepared with an equivalent excess of hydroxyl groups with lesser equivalents of carboxylic acid although this may be minimized depending on equivalents of mono-acid utilized. Similarly, monoalcohols can be used to cap carboxyl groups. On a weight basis, between about 1% and 70% polyester diluent is used based on the microgel polymeric composition. The polyester diluent is synthesized in the normal manner, preferably in the absence of organic solvent, at esterification temperatures of about 150°C to 250°C to completion and to a very low Acid No approaching zero. The in-situ formed resin mixture of epoxy, polyester diluent and addition copolymer dispersant can be dispersed into water with volatile bases as previously described. On a weight basis, the aqueous dispersed crosslinked microgel polymer particles comprise between 1% and 70% polyester diluent, between 1% and 70% high molecular weight epoxy resin, between 10% and 80% addition copolymer of copolymer of copolymerized ethylenic monomer, and between 1% and 40% low molecular weight diepoxide crosslinking resin.

The preferred high molecular weight linear epoxy resins useful with the polyester diluent are polyglycidyl ethers of bispenol-A having terminating 1,2-epoxide groups (oxirane groups) and an epoxy equivalent weight between 700 and 6,000, and a number average molecular weight between 1,500 and 15,000 as measured by gel permeation chromatography (GPC). Commercially available and useful high molecular weight epoxy resins include the commercial higher molecular weight resins such as EPON 1009, 1007, 1004 and the like, as well as resins which are prepared by the advancement of excess equivalents of liquid epoxy resins with lesser equivalents of Bispenol A. Levels of use of the high molecular weight epoxy resins are between about 1% and 70% and preferably between 5% and 30% by weight of the microgel polymeric composition. The high molecular weight epoxy resin is mixed with the low viscosity polyester diluent to provide a polymerization medium for in-situ copolymerization of ethylenically unsaturated monomers.

Referring next to diepoxide crosslinking resins, useful diepoxide resins for crosslinking the carboxyl copolymers are predominantly linear chain molecules comprising the coreaction product of polynuclear dihydroxy phenols or bisphenols with halohydrins to produce epoxy resins containing preferably two epoxy groups per molecule. The most common bisphenols are bisphenol-A, bisphenol-F, bisphenol-S, and 4,4 dihydroxy bisphenol, with the most preferred being bisphenol-A. Halohydrins include epichlorohydrin, dichlorohydrin, and 1,2-dichloro-3-hydroxypropane with the most preferred being epichlorohydrin. Preferred diepoxide resins comprise the coreaction product of excess molar equivalents of epichlorohydrin with bisphenol-A to produce predominantly an epoxy group terminated linear molecular chain of repeating units of diglycidyl ether of bisphenol-A containing between 2 and 5 repeating copolymerized units of diglycidyl ether of bisphenol-A. In practice, an excess molar equivalent of epichlorohydrin are reacted with bisphenol-A to produce diepoxide epoxy resins where up to two moles of epichlorohydrin coreact with one mole of bisphenol-A, although less than complete reaction can produce difunctional epoxy resin along with some monoepoxide chains terminated at the other end with a bisphenol-A unit. The preferred linear epoxy resins are polyglycidyl ethers of bisphenol-A having terminating 1,2-epoxide groups (oxirane groups) and a number average molecular weight between 200 and 10,000 and preferably from about 360 to 1,000 as measured by gel permeation chromatography (GPC). Commercially available lower molecular weight epoxy resins include Dow Chemical epoxy resins identified by trade number and average molecular weights as follows: DER 333 (380); DER 661 (1050); while Shell Chemical epoxy resins are EPON 828 (380); EPON 836 (625); and EPON 1001 (1050). Preferred epoxy equivalent weight epoxy resins have an equivalent weight between 100 and 5,000, and preferably between 180 and 500. Higher equivalent weight epoxy resins do not disperse well, although epoxy blends containing minor amounts of high molecular weight epoxy resins are workable.

Useful diepoxide resins further include non-aqueous alkylene oxide resins which are epoxide functional resins comprising an alkylene oxide adduct of a bisphenol compound. The alkylene oxide is an aliphatic alkyl derivative having up to about 26 carbon atoms although preferred oxides are lower alkyl oxides such as ethylene, propylene, and butylene oxides. Bisphenol compounds including bisphenol-A, bisphenol-F and bissulphone or sulphides. Typically two or more moles of alkyl oxide are coreacted with one mole of bisphenol compound. Preferred compositions are 2:1 molar reactions while a suitable number average molecular weight range of alkylene oxide resins is between 200 and 1,000 as measured by GPC. Other suitable diepoxide functional resins include low molecular weight polyepoxides such as epoxidized sorbitol and epoxy novalacs.

In accordance with the process of this invention, direct or reverse let down procedures can be used for inversion of the addition copolymer dispersant or resin mixtures containing the addition copolymer dispersant into water. Ammonia is generally used as the inverting base, because ammonia gives no added VOC. Common amines, such as dimethylethanol amine, triethyl amine, and the like can be used, alone or in combination with ammonia. The addition copolymer is best inverted hot, at it synthesis temperature, as viscosity rises at lower temperatures to the point where inversion into water is difficult. Only low to moderate shear is required for the inversion of the acrylic. The preferred method is to add the diepoxide crosslinker after the copolymer dispersant and other resins are dispersed into water to avoid possible premature reaction and gelation. Slightly advanced epoxy resin, such as DER 661, or higher molecular weight epoxy resins could be used alone, or in combination with liquid epoxy, but high molecular weight diepoxide resins are not preferred. Once the addition copolymer dispersant (preferably acrylic) and the diepoxide are inverted into water, heat can be applied to increase the rate of the carboxylic acid-epoxy reaction. Catalysts such as tertiary amines, phosphines, pyridine, and the like can be added at low levels (0.1 to 1%) to further increase the acid-epoxy reaction rate. Alternately, the acid-epoxy reaction in water can occur at room temperature over a longer period of time. Viscosity generally rises as this reaction occurs. The resulting diepoxide crosslinked addition copolymers comprise an aqueous micro-dispersion of very small crosslinked polymer particles having an average microgel particle size below 2 microns, desirably less than 1 micron, advantageously between 0.02 and 0.1 micron, and preferably between 0.02 and 0.06 micron size microgel particles. The microgel polymer particles have an Acid No. above 30 desirably between 50 and 200 and preferably between 100 and 200. The aqueous dispersed acrylic-epoxy crosslinked microgel particles provide excellent film forming properties.

The aqueous dispersed, crosslinked microgel polymer particles comprise on a weight basis between about 60% and 99% addition copolymer dispersant and between about 1wt% and 40wt% diepoxide crosslinking resin. Where other resins are dispersed into water with the addition copolymer dispersant before crosslinking with diepoxide resin, the level of diepoxide crosslinking resins remains between 1wt% and 40wt% while the level of addition copolymer dispersant is reduced by the amount of the other resins added. The addition copolymer dispersant is always maintained above 5wt% based on the weight of microgel polymer solids. In accordance with various preferred embodiments of the invention, the aqueous dispersed microgel polymer can contain dispersed resins other than the addition copolymer dispersant and crosslinking diepoxide as follows:
0 to 80%, preferably 1% to 50% carboxyl functional polyester; or
0 to 80%, preferably 1% to 50%, epoxy resin; or
0 to 70%, preferably 1% to 50%, polyester diluent;
where the balance is the addition copolymer dispersant and 1% to 40% diepoxide crosslinking resin.

If desired, improved film properties also can be obtained by a second stage in-situ copolymerization of ethylenic monomers in the presence of the diepoxide crosslinked microgel. In this regard, common ethylenic monomers such as the styrene, the acrylates and the methacrylates previously described can be added to the aqueous dispersed acrylic-epoxy microgel followed by emulsion copolymerization of the ethylenic monomers in the presence of the aqueous stabilized microgel particles. Polymerization of the ethylenic monomers can be initiated with any of the common peroxide initiators, but redox initiation with systems like ascorbic acid/t-butyl perbenzoate/Fe are preferred. As polymerization occurs, large monomer droplets disappear, and the product changes from opaque to translucent in appearance (often appearing to be identical to the acrylic-epoxy microgel precursor). The small size polymer particles are thus maintained in the second stage polymerization. Crosslinking of this second stage polymerization with divinyl materials such as divinyl benzene, and 1,6-hexane diol diacrylate will further improve properties.

In accordance with this aspect of the invention where ethylenic monomers are subsequently copolymerized in the presence of the aqueous dispersed epoxy-acrylic microgel, the polymeric binder can contain up to 200% (preferably 25 to 100%) by weight post copolymerized ethylenic unsaturated monomers based on the weight of the microgel polymer.

In respect to the carboxyl functional acrylic copolymer used as a dispersing agent in accordance with this invention, it has been found advantageous to form a second low Tg polymer in addition to the carboxyl copolymer dispersing agent. In this regard, a second monomer feed comprising low Tg monomers can be added during the high temperature monomer polymerization to generate a low Tg polymer along with the addition copolymer dispersant. The low Tg monomer can be added simultaneously or after the copolymerization of the carboxyl monomer mixture previously described. The low Tg monomer feed however need not contain carboxyl monomer for inversion into water. It has been found that a minor amount of the second low Tg addition polymer enhances film properties as well as application properties of the coating compositions such as improved flexibility and dent resistance.

The microgel dispersions of this invention have particle sizes preferably under 1 micron and can be used as polymeric binders in coatings for containers. The resulting epoxy crosslinked microgel copolymers comprise aqueous micro-dispersions having very small crosslinked microgel polymer particles below 1 micron and preferably between 0.02 and 0.1 microns. The microgel particles produced by carboxyl functional addition copolymer (dispersing agent) and subsequently crosslinked by difunctional epoxy surprisingly provides highly crosslinked copolymers in the form of a stable aqueous microdispersion of extraordinary small internally crosslinked microgel polymer particles without the need for external surfactants and volatile organic solvents. Excellent protective film formations on substrates are achieved without surfactants even. Conventional external crosslinking agents such as melamine are not required.

Accordingly, high quality coatings particularly useful for the interior of beverage cans can be produced with acrylic crosslinked epoxy crosslinked microgel polymeric particles. Aqueous dispersions of these blended resins can be prepared in water with ammonia neutralization with minimal use of volatile solvent and at VOC levels below about 120g/litre (one pound per US gallon) of resin solids and preferably about 60g/litre of resin solids. The cured films exhibit excellent water resistance, good clarity and gloss.

The merits of this invention are further illustrated by the following Examples. Molecular weights are number average molecular weights measured by gel permeation chromatography (GPC).

### EXAMPLE 1

An acrylic-epoxy microgel was produced using the following:
100 g hexyl cellosolve
100 g methacrylic acid
400 g ethyl acrylate
12.5 g benzoyl peroxide

An acrylic copolymer dispersing agent was prepared by heating hexyl cellosolve to 125°C under nitrogen, and then feeding a mixture of the foregoing monomers and benzoyl peroxide in over 2 hours. Two grams of t-butyl perbenzoate were added, the batch held 30 minutes at 125°C, and then cooled. The copolymer was inverted into water and reacted with epoxy as follows:
100 g above acrylic solution
5.0 g DER 333, liquid epoxy (Dow, EEW 190)
400 g deionized water
12.0 g ammonia (28% NH3)
0.5 g ADMA-12, Ethyl Corp. (aliphatic tertiary amine)

The acrylic solution and epoxy were warmed to 100°C, and then ammonia water was added over about 5 minutes, while keeping temperature >60°C. ADMA-12 was added and the mixture was warmed to 95°C, held for 2 hours, and then cooled. Product has a 50nm number average size by disc centrifugation.

### EXAMPLE 2

An acrylic-epoxy microgel was produced using the following:
100 g hexyl cellosolve
125 g methacrylic acid
375 g ethyl acrylate
37.5 g benzoyl peroxide

The monomers were copolymerized to form a preformed copolymer, inverted into water and then reacted with DER 333 epoxy as in Example 1, except that ammonia was increased to 14.3 g. Resulting aqueous dispersed resin product has a 17 second#4 Ford cup viscosity at 25°C.

### EXAMPLE 3

An acrylic-expoxy microgel was produced as above with the acrylic copolymer from Example 1 with 10 grams of DER 333 epoxy. Resulting product had a 24 second#4 Ford cup viscosity.

### EXAMPLE 4

A microgel acrylic blend was produced using the following:
200 g acrylic-microgel from Example 1 above
160 g deionized water
40 g styrene
1.0 g ascorbic acid
10 g water
1.0 g FeSO4 aqueous solution, 1000 ppm
0.8 g t-butyl perbenzoate

The microgel, water, and styrene were purged under nitrogen in solution for 1 hour at 25°C. Ascorbic acid neutralized with NH₄OH was added in the 10g water at pH 7, then the Fe SO₄ solution and initiator were added. Polymerization heated the batch to about 50°C over 2 hours. An additional 0.4g or t-butyl perbenzoate was added and left overnight.

### EXAMPLE 5

A microgel acrylic blend was produced as in Example 4 except the microgel from Example 2 was utilized.

### EXAMPLE 6

A microgel acrylic blend was produced as in Example 4 except the microgel from Example 3 was utilized.

### EXPLANATION FOR TABLE 1

Samples from Examples 1-6 were drawn down with a #12 wire wound bar on aluminum sheet and baked 2 minutes at 380°F. Panels were immersed for 5 minutes in boiling water to observe blush. Other panels were immersed for 30 minutes in a 1% solution of Joy detergent at 180°F (80°C), to observe blush. Results are shown in Table 1.

**Table 1**

| **Sample** | **Water Appearance** | **Joy Blush** | **Blush** |
|---|---|---|---|
| 1 | clear, glossy | 0 | 2 |
| 2 | clear, glossy | * | 2 |
| 3 | clear, glossy | 0 | 0 |
| 4 | clear, glossy | 0 | 0 |
| 5 | clear, glossy | 1 | 2 |
| 6 | clear, glossy | 0 | 0 |
| Blush: 0 = no effect, 2-3 = moderate blush,. 5 = heavy blush. | | | |

### EXAMPLE 7

Dispersing Agent. An acrylic copolymer dispersing agent was prepared from the following raw materials.

| | Raw Material | Grams |
|---|---|---|
| (a) | Butyl cellosolve | 75 |
| | hexyl cellosolve | 75 |
| | methacrylic acid | 22.5 |
| | styrene | 26.3 |
| | ethyl acrylate | 26.3 |
| (b) | methacrylic acid | 202.5 |
| | styrene | 236.3 |
| | ethyl acrylate | 236.3 |
| | dicumyl peroxide | 30 |
| (c) | ammonia (28%) | 127 |
| | water | 1000 |
| (d) | water | 517 |

Raw material components (a) were heated to 150°C under nitrogen in a glass reactor. Components (b) were then added over about 6 hours and then held at 150°C for about one half hour. Components (c) were added slowly to invert and then water (d) was added for dilution and form an aqueous dispersion of copolymer dispersing agent in water.

Microgel. A microgel polymeric binder was formed with the foregoing copolymer dispersing agent as follows:

| Raw Material | Grams |
|---|---|
| Copolymer dispersing agent | 333 |
| water | 167 |
| DER 333 epoxy (190 eq. weight) | 40 |
| Triphenyl phosphine | 0.15 |

The above materials were heated to 90°C, held for 2 hours, and then cooled to room temperature. A film applied over an aluminum substrate was baked for two minutes at 380°F (190°C). The cured film did not exhibit blush in boiling water or 180°F (80°C) Joy solution and provided clear, glossy smooth paint films.

### EXAMPLE 8

A microgel polymeric binder was prepared in the same manner as in Example 7.
Dispersing Agent. A dispersing agent was prepared as follows:

| | Raw Material | Grams |
|---|---|---|
| (a) | butyl cellosolve | 100 |
| | methacrylic acid | 15 |
| | styrene | 20 |
| | butyl acrylate | 15 |
| (b) | methacrylic acid | 135 |
| | styrene | 180 |
| | butyl acrylate | 135 |
| | dicumyl peroxide | 20 |
| (c) | ammonia, 28% | 85 |
| | water | 700 |
| (d) | water | 675 |

Microgel. A microgel was prepared as follows:

| Raw Material | Grams |
|---|---|
| Copolymer dispersing agent | 400 |
| DER 333 | 40 |
| triphenyl phosphine | O.20 |

A coating film applied to an aluminum substrate and baked as in Example 7 produced a slightly hazy cured film with comparable physical properties.

### EXAMPLE 9

A microgel polymer was prepared as follows:
a) 500 g poly (ethylene-co-acrylic acid), Primacore 5980, Dow Chem, 20% acrylic acid 1500 g water 76 g ammonia (28% NH₃) 12.4 g dimethylethanol amine
b) 100 g DER 333, Dow liquid epoxy
c) 539 g water

Warm (a) to 90°C, hold 10 minutes to form polymer dispersion, and cool to 80°C to form polymer dispersion. Add b), stir 5 minutes, and then add c). Hold 2 hours at 90°C, cool. Films baked for 2 minutes at 380°F (190°C) on aluminum panels were very clear, glossy, and hard. No film blushing was noted after 5 minutes in boiling water.

### EXAMPLE 10

Acrylic Dispersion. An acrylic dispersion was prepared as follows:

| | | |
|---|---|---|
| a) | Hexyl cellosolve | 114 g |
| | ethyl acrylate | 20 g |
| | Methacrylic acid | 17 g |
| | styrene | 20 g |
| b) | ethyl acrylate | 180 g |
| | methacrylic acid | 154 g |
| | styrene | 180 g |
| | dicumyl peroxide | 22.8 g |
| c) | ammonium hydroxide (28% NH₃) | 32.2 g |
| | dimethylethanol amine | 35.4 g |
| | water | 139 g |
| d) | water | 982 g |

Heat (a) to 150°C. Add (b) over 4 hours. Hold 1/2 hour. Add (c) over 10 minutes, then add (d). Cool.

### EXAMPLE 11

Microgel

| | | |
|---|---|---|
| a) | butylcellosolve | 50 g |
| | hexyl cellosolve | 50 g |
| b) | butyl acrylate | 105 g |
| | styrene | 73 g |
| | methacrylic acid | 1.8 g |
| | dicumyl peroxide | 1.8 g |
| c) | methacrylic acid | 144 g |
| | styrene | 88 g |
| | ethyl acrylate | 88 g |
| | dicumyl peroxide | 6.4 g |
| d) | water | 400 g |
| | dimethylethanol | 101 g |
| e) | DER 333, Dow liquid epoxy | 204 g |
| f) | water | 1931 g |

Warm (a) to 150°C, add (b) over 90 minutes, hold 5 minutes, add (c) over 2 hours, hold 0.5 hour, then add (d) over 10 minutes allowing temperature to drop to 80°C. Add (e), hold 3 minutes, then add (f). Hold 2 hours at 90°C, then cool.

### EXAMPLE 12

### Microgel Blend with Acrylic Dispersion

Combine 150 g of dispersion from Example #10 with 850 g of microgel from example #11. Stir 1/2 hour at 60°C and then. cool. The spray application when sprayed onto aluminum cans was rated as giving a more uniform coating than microgel of Example 11 alone. After baking 2 minutes at 380°F, both coatings from example #11 and #12 had no blushing when exposed to boiling water for 5 minutes, or a 1% Joy detergent for 30 minutes at 180°F (80°C).

### EXAMPLE 13

### Preparation of Carboxyl Functional Unsaturated Polyester

A 5 litre flask was equipped with an overhead stirrer, N₂ inlet, thermometer, and a packed distillation column with head. The flask was charged with 1242.1 gms of propylene glycol, 345.1 gms of fumaric acid, 1211.4 gms of terephthalic acid, and 1.0 gm of butylstannoic acid. The slurry was stirred and warmed to about 165°C with continuous stirring and nitrogen sparging. Water was removed at a head temperature of 98°C to 100°C, while the batch temperature gradually rose to 220°C over several hours. When 360 mls of water had been removed, the slurry became a clear solution. The reaction was cooled to 180°C, then 1211.4 g. of isophthalic acid were added. The new slurry was heated and additional water was removed. The reaction temperature was allowed to rise to, but not exceed 225°C. After 450 mls of water were removed, the packed column was replaced with a Vigreux column and additional water was removed to bring the total volume of water to 520 mls. The column was then replaced with a Dean-Stark trap, and additional water was removed. When the acid number was 70, the reaction was cooled to 170°C. At 170°C, the reactor was opened and the product was poured into a storage container. The polyester solidified upon cooling to room temperature.

### EXAMPLE 14

### Preparation of Carboxyl Functional Acrylic Polymeric Dispersant

A two litre flask was equipped with a reflux condenser, overhead stirrer, N₂ inlet, thermometer and an addition port. The flask was charged with 160 gms of ethylene glycol mono-hexyl ether and warmed to 125°C with stirring under a nitrogen blanket. A separate vessel was charged with 200 gms of methacrylic acid, 600 gms of ethyl acrylate, and 40 gms of 80% benzoyl peroxide and stirred to form a homogeneous solution. This solution was gradually added to the reaction flask over three hours whilst maintaining the temperature at 125°C. When the addition was complete, 3.2 gms of t-benzyl perbenzoate were added and the reaction was held at 125°C an additional hour.

### EXAMPLE 15

### Preparation of Polyester/Acrylic Aqueous Dispersion

A one litre flask was equipped with an overhead stirrer, nitrogen inlet and thermometer. The flask was charged with 60 gms of polyester from Example 13, 48 gms of polymeric dispersant from Example 14, 13.5 gms of styrene, 45 gms of Ba, and 1.5 gms of divinyl benzene. The mixture was then heated, under air atmosphere, to 90°C and stirred for about 25 minutes until a fine slurry was formed. A mixture of 12 gms of ammonia (28% in water) and 28 gms of water was added via dropping funnel over about five minutes and the reaction temperature was allowed to fall. A N₂ blanket was established whilst an additional 424.5 gms of water were added over about 20 minutes to dilute the emulsion allowing the temperature to drop further. The temperature was held at 50°C. A solution of 0.1% FeSO₄ (1.5 gms) was added. The redox solutions was prepared by dissolving 0.4 gms of Sodium Formaldehyde Sulphoxylate (SFS) into 1.6 gms of water. A separate solution of 0.3 gms of 70% tert. butyl hydroperoxide in 1.7 gms of water was prepared. These solutions were added to the reaction vessel and the reaction exothermed to 63°C over about 10 minutes. When the reaction cooled to 50°C, two chaser solutions (0.1 gm SFS in 0.9 water and 0.075 tBHP in .925 gm water) were added and the reaction was held at 50° for 30 minutes. The reaction was then cooled to 30°C and filtered into storage vessel. There was no grit. The pH was 7.7 and the No. 4 Ford cup viscosity was 15 seconds at 25°C. The particle size was less than 100 nm. The NV was 25%.

### EXAMPLE 16

### Preparation of Crosslinked Microgel

100 gms of the aqueous dispersion polyester/acrylic prepared in Example 15 was blended with 3.0 gms of DER 333, 9 gms of water, and 1 drop of dimethylethanolamine. The mixture was shaken vigorously for 20 seconds, then placed in an oven at 50°C for 17 hours. The pH of the resulting dispersion was 8.7, and the No. 4 Ford Cup viscosity was 74 seconds at 25°C. The NV was 25%.

This resin, when applied as a thin film to aluminum panels and air dried, exhibited excellent resistance to water blush, Joy blush, and wedgebend failure.

### EXAMPLE 17

In a manner similar to Examples 13-16, microgel particles for use as a polymeric binder in protective coatings were prepared as follows:

### A. Preparation of acrylic dispersant

A methacrylic acid polymer was prepared as follows: a mixture of 1.0 g (NH₄)₂S₂O₈, 4.0 g ethylacrylate, 96 g methacrylic acid, and 1850 g deionized water was warmed under nitrogen to 40°C. A second mixture of 0.80 g ascorbic acid in 50 ml of water was pumped in over 1.5 hours, and the batch was held of 0.5 hours before cooling.

### B. Preparation of unsaturated polyester

Prepare a polyester from the following:

| | |
|---|---|
| 360.4 g | 1,3-butyleneglycol |
| 249.3 g | terephthalic acid |
| 249.3 g | isophthalic acid |
| 10.0 g | fumaric acid |
| 73.1 g | adipic acid |
| 0.5 g | butylstanoic acid |

The glycol was heated with the iso- and terephthalic acids to 230°C under nitrogen with good stirring and a packed column (keep head temperature at 98°C), and cooked until the mixture was clear. The other ingredients were added and cooked to a low acid number with xylene azeotrope (ca. 10 mg KOH/g resin).

### C. Preparation of aqueous suspension

| | | |
|---|---|---|
| a) | 600 g | water |
| | 2.0 | ascorbic acid |
| | 200 g | acrylic dispersant part A |
| b) | 50 g | polyester of part B |
| | 20 g | butylacrylate |
| | 80 g | styrene |
| c) | 1.0 ml | 1000 ppm FeSO₄ solution |
| d) | 2.5 g | (NH₄)₂S₂O₈ |
| | 25 g | water |
| e) | 5.0 g | NH₃,28% aqueous |
| | 10 g | water |

Mixture (a) was dispersed in (b) with high shear mixing, and then passed through a Sonics ultrasound device at 85% power. The dispersion was warmed to 40°C under nitrogen, (c) was added, (d) was then pumped in over 2 hours. Then (e) was added over 5 minutes and the batch was cooled. A mixture of 950 g water with 47.5 g methacrylic acid, 2.5 g ethylacrylate, and 0.5 g t-butylhydroperoxide was then added. Under nitrogen at 50°C, a solution of 0.5 g ascorbic acid in 25 g water was added over 2 hours.

### D. Preparation of epoxy crosslinked microgel

| | | |
|---|---|---|
| a) | 103 g | resulting solution of composition part C |
| | 497 g | water |
| b) | 50 g | Epon 1007F, Shell epoxy (diepoxide) |
| | 60 g | styrene |
| | 40 g | ethylacrylate |
| c) | 0.5 g | ascorbic acid |
| | 25 g | water |
| d) | 7.0 g | NH₃ 29% aqueous |
| | 18 g | water |

A suspension was prepared and polymerized as in part C above. A film prepared from the resulting composition was baked 5 minutes at 350°F (175°C). The film was smooth and lightly hazed, with no blush noted. After a 1 hour wait, the film was soaked at 180°F (80°C), but did not exhibit any film deterioration.

### EXAMPLE 18

An acrylic copolymer and epoxy were produced from the following raw materials.

| | Grams | Raw Material |
|---|---|---|
| a) | 116 | Epon 1009F, solid epoxy, Shell |
| | 40 | Hexyl Cellosolve |
| | 40 | Butyl Cellosolve |
| | 92 | n-butanol |
| b) | 80 | methacrylic acid |
| | 60 | styrene |
| | 60 | ethyl acrylate |
| | 16 | benzoyl peroxide, 78% |
| c) | 36 | dimethylethanol amine |
| | 15 | ammonia, 28% |
| | 400 | water |
| d) | 600 | water |

Component group (a) was warmed to 117°C under a nitrogen blanket and held at about that temperature while component group (b) was added over a period of 2.5 hours. After components (b) were added, the reaction mixture was held for 0.5 hours and cooled to 100°C. Component group (c) was then added over about 10 minutes to invert and disperse the polymer into water. Water (d) was then added.

### EXAMPLES 19-22

The acrylic modified epoxy of Example 18 was utilized as the base resin in each of the following Examples with variable amounts of liquid epoxy (DER 331) equivalent weight about 187 added as indicated below in Table 2. The liquid epoxy was added to the aqueous dispersion of the acrylic modified epoxy and the dispersion thereof heated to about 90°C with moderate stirring (300 RPM paddle stirrer) and held at about 90°C for two hours. The neutralizing base, dimethyl ethanol amine functions as the catalyst for the microgel crosslinking reaction. The resulting reaction mixture comprised a microgel and was cooled to room temperature.

**TABLE 2**

| Material | Ex 19 | Ex 20 | Ex 21 | Ex 22 |
|---|---|---|---|---|
| Acrylic epoxy (Ex 18) | 250 gm | 250 gm | 250 gm | 250 gm |
| Water | 59 gm | 74 gm | 90 gm | 108 gm |
| DER 331 epoxy | 2.8 gm | 5.9 gm | 9.4 gm | 13.5 gm |

Drawdown test films were applied by No. 16 wire wound bar to tin plate substrate and heat cured at 350°F (175°C) for two minutes. Properties of the cured coating films were as follows.

The acrylic epoxy of Example 18 was included for comparison.

| PROPERTY | EX 19 | EX 20 | EX 21 | EX 22 | EX 18 |
|---|---|---|---|---|---|
| Gloss | High | High | High | High | High |
| Clarity | good | Good | Good | Good | Good |
| Texture | Smooth | Smooth | Smooth | Smooth | Smooth |
| Water Blush, 100°C | Slight | None | None | None | Heavy |

### EXAMPLE 23

| **ACRYLIC GRAFT EPOXY** | | |
|---|---|---|
| a) | 75 g | EPON 1009, Shell |
| | 40 g | hexyl cellosolve |
| | 40 g | butyl cellosolve |
| b) | 105 g | methacrylic acid |
| | 140 g | styrene |
| | 105 g | ethyl acrylate |
| | 21 g | t-butyl perbenzoate |

A solution of (a) was warmed to 150 C under nitrogen. Mixture (b) was then added over 3 hours and held for 0.5 hours.

### EXAMPLE 24

At 150°C 75g, EPON 1001 (Shell) was added to an acrylic graft epoxy prepared as in Example 23. After 3 minutes blending, 400 g water containing 55 g ammonium hydroxide (28% NH₃) was added over 10 minutes to invert the resin. A solution of 1025 g of water containing 8.2 g dimethylethanol amine was then added and the dispersion was heated to 90°C, and stirred 2 hours, before cooling to form microgel. (15% EPON 1001 on solids).

### EXAMPLE 25

Example 24 was repeated but 75g EPON 1004 (Shell) was used to replace EPON 1001. (15% EPON 1004 on solids).

### EXAMPLE 26

Example 24 was repeated but EPON 1001 was omitted and the water addition was reduced to 800 g.

### EXAMPLE 27

To 895 g of aqueous dispersion from Example 26, 37.5 g DER 333 and 112.5 water were added, the mixture heated to 90°C, stirred 2 hours to form the microgel and cooled (15% DER 333 on solids).

### EXAMPLE 28

To 895 g of aqueous dispersion from Example 26, 18.8 g DER 333 and 56 g water was added and then formed a microgel (7.5% DER 333 on solids).

Films from Example 24, 25, 27 and 28 were prepared by applying microgel dispersions to aluminum panels with a number 16 wire wound bar and then baked at 182°C (360°F) for 2 minutes. A second set of panels was baked at 182°C for 5 minutes. Water resistance was measured by placing panels in boiling deionized water for 5 minutes.

**TABLE 3**

| **RESULTS** | | | |
|---|---|---|---|
| FILM OF EXAMPLE | APPEARANCE | 2 MIN. BAKE WATER BLUSH | 5 MIN BAKE WATER BLUSH |
| #24 | clear,glossy,smooth | Slight blush | no blush |
| #25 | clear,glossy,smooth | heavy blush | medium-heavy blush |
| #27 | clear,glossy,smooth | no blush | no blush |
| #28 | clear,glossy,smooth | slight blush | no blush |

Excellent clarity and gloss was obtained for each microgel dispersion, but water resistance was much better for EPON 1001 and DER 333 than for EPON 1004, DER 333 performed as well as EPON 1001 at only 7.5% on solids. Lower molecular weight liquid diepoxide resins like DER 333 and EPON 1001 provide superior coatings (as compared to higher molecular weight diepoxide resins like EPON 1004) when used to crosslink acrylic graft epoxy dispersions.

### EXAMPLE 29

### Polyester synthesis:

548 g adipic acid
208 g isophthalic acid
584 g diethylene glygol
0.3 g butylstanoic acid

The above was heated under nitrogen to 230°C over 3 hours. A glass bead packed column was used and a head temperature of 99°C. After the head temperature dropped below 60°C, the column was removed and xylene azeotrope was used with a Dean Stark trap to achieve acid number 12 mg KOH/g resin. Xylene was removed with 25 inches of vacuum.

### EXAMPLE 30

### Preparation of aqueous dispersion

| | | |
|---|---|---|
| a) | 150 g | polyester from Example 29 |
| | 25 g | Epon 1009 |
| b) | 15 g | t-butyl perbenzoate |
| | 90 g | methacrylic acid |
| | 80 g | styrene |
| | 80 g | ethyl acrylate |
| c) | 400 g | water |
| | 7.5 | dimethylethanol amine |
| | 46 | ammonium hydroxide, 28% NH₃ |
| d) | 1102 g | water |

Mixture (a) was heated to 150°C under nitrogen. Solution (b) was added over 2.5 hours, and held 1/2 hour. Solution (c) was added over 10 minutes from a dropping funnel, slowly, and then gradually more rapidly as batch temperature dropped below 100°. Water in (d) was added rapidly. To form a microgel, 35 g DER 333 was added to 900 g of this aqueous inversion, and held at 90°C for 2 hours.

### EXAMPLE 31

| | | |
|---|---|---|
| a) | 75 g | polyester from Example 29 |
| b) | 8.0 g | t-butyl perbenzoate |
| | 45 g | methacrylic acid |
| | 48 g | styrene |
| | 40 g | ethyl acrylate |
| c) | 200 g | water |
| | 4.0 g | dimethylethanol amine |
| | 23 g | ammonium hydroxide, 28% NH₃ |
| d) | 673 g | water |
| e) | 39 g | DER 333 (diepoxide) |

Polyester (a) was heated to 150°C, then solution (b) was added over 2.5 hours, then held 1 hour, then (c) was added to invert the resin. Then (d) and (e) were added. After holding for 2 hours at 90°C, a microgel formed and the batch was then cooled.

### RESULTS

Draw down films of Example 31 and Example 32 resins were applied over aluminum panels with a#18 wire wound bar. The films were baked for 2 minutes at 380°F (190°C). Both panels were clear, glossy, and smooth. No blush was noted after 5 minutes in boiling deionized water.

## Claims

1. A process for producing a protective coating composition comprising carboxyl moieties and epoxy crosslinking resin dispersed in an aqueous medium characterised in that
a) an addition copolymer dispersant consisting of non-aqueous copolymerized ethylenically unsaturated monomers including at least 5% by weight of carboxyl monomers based on the weight of monomers copolymerized and having a number average molecular weight between 1,000 and 50,000 and an Acid No. above 30 is dispersed into water,
b) diepoxide crosslinking resin is dispersed into the water with the addition copolymer dispersant, the diepoxide crosslinker having an epoxide equivalent weight between 100 and 500 and a number average molecular weight between 200 and 1,000,
c) crosslinking the carboxyl functional addition copolymer dispersant with the diepoxide crosslinker whereby there is produced aqueous dispersed crosslinked microgel polymer particles having a particle size below 1 micron and an Acid No. above 30 and containing from 60 to 90wt% of said addition copolymer dispersant crosslinked with 10% to 40% of the diepoxide resin, which microgel polymer particles are stably dispersed into water which contains minimal or zero amounts of organic compounds and is substantially free of surfactant.

2. A process according to Claim 1 characterised in that water and the diepoxide resin are dispersed into the aqueous dispersed addition copolymer dispersant.

3. A process according to Claim 2 characterised in that ethylenic monomers are emulsion copolymerized in the presence of the aqueous dispersed microgel polymer particles to produce emulsion polymer modified microgel polymer.

4. A process according to Claim 2 or Claim 3 characterised in that a carboxyl functional polyester oligomer having an Acid No. between 20 and 200 and a number average molecular weight between 600 and 5,000 is dispersed into water with the addition copolymer dispersant, and the diepoxide is crosslinked with the carboxyl functional polyester oligomer and the addition copolymer dispersant to produce an aqueous dispersed microgel polymer comprising by weight between 2% and 95% addition copolymer dispersant, between 1% and 97% polyester oligomer, and between 1% and 50% diepoxide crosslinker.

5. A process according to Claim 4 characterised in that the polyester oligomer and addition copolymer dispersant are dispersed into water simultaneously.

6. A process according to Claim 5 characterised in that the addition copolymer dispersant is formed by in-situ copolymerization of the ethylenically unsaturated monomers in the presence of the polyester oligomer and the in-situ formed resin mixture is dispersed into water.

7. A process according to Claim 6 characterised in that the polyester oligomer is an unsaturated polyester and the in-situ copolymerized ethylenically unsaturated monomers interpolymerize with the unsaturated polyester oligomer.

8. A process according to Claim 7 characterised in that an epoxy resin is dispersed into water with the addition copolymer dispersant and subsequently the addition copolymer dispersant is crosslinked with the diepoxide resin.

9. A process according to Claim 8 characterised in that the addition copolymer dispersant is formed by in-situ polymerization of the ethylenically unsaturated monomers in the presence of the epoxy resin prior to dispersing the addition copolymer dispersant into water.

10. A process according to Claim 9 characterised in that the in-situ polymerized monomers are copolymerized in the presence of 1% to 10% peroxide initiator based on the weight of monomers copolymerized and at temperatures between 80°C and 180°C.

11. A process according to Claim 10 characterised in that the crosslinked microgel polymer comprises between 5% and 40% diepoxide.

12. A process according to any one of Claims 8 to 11 characterised in that a polyester diluent is mixed with the epoxy resin prior to the step of polymerizing the ethylenically unsaturated monomers in the presence of the epoxy resin, where the microgel polymer comprises by weight between 10% and 80% addition copolymer dispersant, between 1% and 70% polyester diluent, between 1% and 30% epoxy resin, and between 1% and 40% diepoxide crosslinker.

## Patentansprüche

1. Verfahren zur Herstellung einer Schutzbeschichtungs-Zusammensetzung, die Carboxylanteile und ein Epoxid-Vernetzungsharz, dispergiert in einem wässrigen Medium, aufweist, dadurch gekennzeichnet, daß
a) ein Additionscopolymer-Dispergiermittel, das aus nicht-wässrigen copolymerisierten ethylenisch ungesättigten Monomeren, die wenigstens 5 Gew.-% an Carboxylmonomeren, bezogen auf das Gewicht der copolymerisierten Monomeren, enthalten, besteht und ein Zahlenmittel des Durchschnittsmolekulargewichts zwischen 1.000 und 50.000 sowie eine Säurezahl von mehr als 30 aufweist, in Wasser dispergiert wird,
b) ein Diepoxid-Vernetzungsharz in dem Wasser mit dem Additionscopolymer-Dispergiermittel dispergiert wird, wobei der Diepoxid-Vernetzer ein Epoxid-Äquivalentgewicht zwischen 100 und 500 sowie ein Zahlenmittel des Durchschnittsmolekulargewichts zwischen 200 und 1.000 aufweist,
c) das carboxylfunktionelle Additionscopolymer-Dispergiermittel mit dem Diepoxid-Vernetzer vernetzt wird, wodurch Polymerteilchen eines wässrigen dispergierten vernetzten Microgels hergestellt werden, die eine Teilchengröße unterhalb von 1 µm und eine Säurezahl von mehr als 30 aufweisen und die von 60 bis 90 Gew.-% des genannten Additionscopolymer-Dispergiermittels, vernetzt mit 10% bis 40% des Diepoxidharzes, enthalten, wobei die Microgel-Polymerteilchen stabil in Wasser dispergiert sind, das nur minimale oder keinerlei Mengen an organischen Verbindungen enthält und das im wesentlichen tensidfrei ist.

2. Verfahren nach Anspruch 1, dadurch gekennzeichnet, daß Wasser und das Diepoxidharz in dem wässrigen dispergierten Additionscopolymer-Dispergiermittel dispergiert werden.

3. Verfahren nach Anspruch 2, dadurch gekennzeichnet, daß ethylenische Monomere in Gegenwart der wässrigen dispergierten Microgel-Polymerteilchen Emulsions-copolymerisiert werden, um ein Emulsionspolymer-modifiziertes Microgel-Polymer herzustellen.

4. Verfahren nach Anspruch 2 oder Anspruch 3, dadurch gekennzeichnet, daß ein carboxylfunktionelles Polyester-Oligomer mit einer Säurezahl zwischen 20 und 200 und einem Zahlenmittel des Durchschnittsmolekulargewichts zwischen 600 und 5.000 mit dem Additionscopolymer-Dispergiermittel in Wasser dispergiert wird, und daß das Diepoxid mit dem carboxylfunktionellen Polyester-Oligomer und dem Additionscopolymer-Dispergiermittel vernetzt wird, um ein wässriges dispergiertes Microgel-Polymer herzustellen, das zwischen 2 und 95 Gew.-% Additionscopolymer-Dispergiermittel, zwischen 1 und 97 Gew.-% Polyester-Oligomer und zwischen 1 und 50 Gew.-% Diepoxid-Vernetzer enthält.

5. Verfahren nach Anspruch 4, dadurch gekennzeichnet, daß das Polyester-Oligomer und das Additionscopolymer-Dispergiermittel simultan in Wasser dispergiert werden.

6. Verfahren nach Anspruch 5, dadurch gekennzeichnet, daß das Additionscopolymer-Dispergiermittel durch in-situ-Copolymerisation der ethylenisch ungesättigten Monomeren in Gegenwart des Polyester-Oligomers gebildet wird, und daß die in-situ gebildete Harzmischung in Wasser dispergiert wird.

7. Verfahren nach Anspruch 6, dadurch gekennzeichnet, daß das Polyester-Oligomer ein ungesättigter Polyester ist, und daß die in-situ copolymerisierten ethylenisch ungesättigten Monomeren mit dem ungesättigten Polyester-Oligomer mischpolymerisieren.

8. Verfahren nach Anspruch 7, dadurch gekennzeichnet, daß ein Epoxidharz in Wasser mit dem Additionscopolymer-Dispergiermittel dispergiert wird und anschließend das Additionscopolymer-Dispergiermittel mit dem Diepoxid-Harz vernetzt wird.

9. Verfahren nach Anspruch 8, dadurch gekennzeichnet, daß das Additionscopolymer-Dispergiermittel durch in-situ-Polymerisation der ethylenisch ungesättigten Monomeren in Gegenwart des Epoxidharzes gebildet wird, bevor das Additionscopolymer-Dispergiermittels in Wasser dispergiert wird.

10. Verfahren nach Anspruch 9, dadurch gekennzeichnet, daß die in-situ polymerisierten Monomeren in Gegenwart von 1% bis 10% Peroxidinitiator, bezogen auf das Gewicht der copolymerisierten Monomeren, und bei Temperaturen zwischen 80°C und 180°C copolymerisiert werden.

11. Verfahren nach Anspruch 10, dadurch gekennzeichnet, daß das vernetzte Microgel-Polymer zwischen 5% und 40% Diepoxid aufweist.

12. Verfahren nach irgendeinem der Ansprüche 8 bis 11, dadurch gekennzeichnet, daß ein Polyester-Verdünnungsmittel vor der Stufe der Polymerisierung der ethylenisch ungesättigten Monomeren in Gegenwart des Epoxidharzes mit dem Epoxidharz vermischt wird, wobei das Microgel-Polymer zwischen 10 und 80 Gew.-% Additionscopolymer-Dispergiermittel, zwischen 1 und 70 Gew.-% Polyester-Verdünnungsmittel, zwischen 1 und 30 Gew.-% Epoxidharz und zwischen 1 und 40 Gew.-% Diepoxid-Vernetzungsmittel enthält.

## Revendications

1. Procédé de production d'une composition pour revêtement protecteur, comprenant des groupements carboxyle et une résine époxy de réticulation en dispersion dans un milieu aqueux, caractérisé en ce que
a) un dispersant qui est un copolymère d'addition consistant en monomères à non-saturation éthylénique copolymérisés non aqueux comprenant au moins 5 % en poids de monomères carboxyliques sur la base du poids de monomères copolymérisés et ayant une moyenne numérique de poids moléculaire comprise entre 1000 et 50 000 et un indice d'acide supérieur à 30 est dispersé dans l'eau,
b) une résine diépoxyde de réticulation est dispersée dans l'eau avec le dispersant copolymère d'addition, le diépoxyde utilisé comme agent de réticulation ayant un poids équivalent d'époxyde compris entre 100 et 500 et une moyenne numérique de poids moléculaire comprise entre 200 et 1000,
(c) le dispersant copolymère d'addition à fonction carboxyle est réticulé avec l'agent de réticulation formé du diépoxyde, ce qui donne des particules de microgel de polymère réticulé en dispersion aqueuse ayant un diamètre inférieur à 1 µm et un indice d'acide supérieur à 30 et contenant 60 à 90 % en poids du dispersant copolymère d'addition réticulé avec 10 à 40 % de la résine diépoxyde, les particules de microgel de polymère étant dispersées de façon stable dans de l'eau qui contient des quantités minimales ou nulles de composés organiques et qui est sensiblement exempte d'agent tensio-actif.

2. Procédé suivant la revendication 1, caractérisé en ce que l'eau et la résine diépoxyde sont dispersées dans le dispersant copolymère d'addition en dispersion dans l'eau.

3. Procédé suivant la revendication 2, caractérisé en ce que des monomères éthyléniques sont copolymérisés en émulsion en présence des particules de microgel de polymère en dispersion aqueuse pour produire un polymère en microgel modifié par du polymère en émulsion.

4. Procédé suivant la revendication 2 ou la revendication 3, caractérisé en ce qu'un oligomère de polyester à fonction carboxyle ayant un indice d'acide compris entre 20 et 200 et une moyenne numérique de poids moléculaire comprise entre 600 et 5000 est dispersé dans l'eau avec le dispersant copolymère d'addition, et le diépoxyde est réticulé avec l'oligomère de polyester à fonction carboxyle et le dispersant copolymère d'addition pour produire un microgel de polymère en dispersion aqueuse comprenant en poids entre 2 % et 95 % de dispersant copolymère d'addition, entre 1 % et 97 % d'oligomère de polyester et entre 1 % et 50 % de diépoxyde de réticulation.

5. Procédé suivant la revendication 4, caractérisé en ce que l'oligomère de polyester et le dispersant copolymère d'addition sont dispersés simultanément dans l'eau.

6. Procédé suivant la revendication 5, caractérisé en ce que le dispersant copolymère d'addition est formé par copolymérisation in situ des monomères à non-saturation éthylénique en présence d'un oligomère de polyester et le mélange de résine formé in situ est dispersé dans l'eau.

7. Procédé suivant la revendication 6, caractérisé en ce que l'oligomère de polyester est un polyester non saturé et les monomères à non-saturation éthylénique copolymérisés in situ s'interpolymérisent avec l'oligomère de polyester non saturé.

8. Procédé suivant la revendication 7, caractérisé en ce qu'une résine époxy est dispersée dans l'eau avec le dispersant copolymère d'addition puis le dispersant copolymère d'addition est réticulé avec la résine diépoxyde.

9. Procédé suivant la revendication 8, caractérisé en ce que le dispersant copolymère d'addition est formé par polymérisation in situ des monomères à non-saturation éthylénique en présence de la résine époxy avant la dispersion du dispersant copolymère d'addition dans l'eau.

10. Procédé suivant la revendication 9, caractérisé en ce que les monomères polymérisés in situ sont copolymérisés en présence de 1 % à 10 % d'initiateur du type d'un peroxyde sur la base du poids de monomères copolymérisés et à des températures comprises entre 80°C et 180°C.

11. Procédé suivant la revendication 10, caractérisé en ce que le polymère sous forme de microgel réticulé comprend entre 5 % et 40 % de diépoxyde.

12. Procédé suivant l'une quelconque des revendications 8 à 11, caractérisé en ce qu'un diluant polyester est mélangé avec la résine époxy avant l'étape de polymérisation des monomères à non-saturation éthylénique en présence de la résine époxy, le polymère sous forme de microgel comprenant en poids entre 10 % et 80 % du dispersant copolymère d'addition, entre 1 % et 70 % du diluant polyester, entre 1 % et 30 % de résine époxy et entre 1 % et 40 % d'agent de réticulation formé du diépoxyde.
